# EUROPEAN PATENT APPLICATION

(11) **EP 4 160 371 A1**
(43) Date of publication of application: **05.04.2023**
(21) Application number: 21813290.0
(22) Date of filing: 25.05.2021
(51) Int. Cl.: G06F 3/0481, G06F 3/0484

(54) **UNREAD MESSAGE DISPLAY METHOD AND APPARATUS, AND ELECTRONIC DEVICE**

(30) Priority: 27.05.2020 CN 202010463585
(71) Applicant: Vivo Mobile Communication Co., Ltd., Dongguan, Guangdong 523863 (CN)
(72) Inventor: TANG, Aibo, Dongguan, Guangdong 523863 (CN)
(74) Representative: Raffay & Fleck
(86) International application number: PCT/CN2021/095890
(87) International publication number: WO 2021/238946

(57) **Abstract**

An unread message display method and apparatus and an electronic device, applied to the technical field of communications. The method comprises: an electronic device displays a target three-dimensional graphic control (201); the electronic device receives a first input on a first area in the target three-dimensional graphic control (202); and in response to the first input, the electronic device displays a first unread message (203), wherein the display surface of the target three-dimensional graphic control comprises N areas, each area indicates different message categories, the first unread message is an unread message corresponding to a first message category indicated by the first area, and N is a positive integer.

## Description

### CROSS-REFERENCE TO RELATED APPLICATIONS

This application claims priority to Chinese Patent Application No. 202010463585.6, filed to the Chinese Patent Office on May 27, 2020, which is hereby incorporated by reference in its entirety.

### TECHNICAL FIELD

Embodiments of the present invention relate to the field of communication technologies, and in particular, to a method and apparatus for displaying an unread message, and an electronic device.

### BACKGROUND

With the development of electronic device technologies, the number of applications in an electronic device (e.g., a mobile phone and a tablet computer) is increasing, and the number and types of unread messages received by the electronic device are also increasing.

In the related art, after receiving an unread message, the electronic device displays the unread message in a message notification bar, and displays an application icon of an application corresponding to the unread message in a status bar to notify a user of the unread message.

However, in a case that the electronic device receives a large number of unread messages, the user needs to perform a page-flipping operation on a desktop interface, so as to view, in different desktop pages, applications containing different unread messages. Therefore, it is difficult for the user to find, in a timely fashion, the unread message that the user wants to view from the message notification bar, which eventually causes the problem that the user misses the unread message.

### SUMMARY

Embodiments of the present invention provide a method and apparatus for displaying an unread message, and an electronic device, which can solve the problems that a user misses some unread messages due to manual screening, and the working efficiency is reduced.

In order to solve the foregoing technical problems, the present invention is implemented as follows.

According to a first aspect, the embodiments of the present invention provide a method for displaying an unread message. The method includes: an electronic device displays a target three-dimensional graphical control; the electronic device receives a first input to a first area of the target three-dimensional graphical control; and in response to the first input, the electronic device displays a first unread message. A display surface of the target three-dimensional graphical control includes N areas, each area respectively indicates a different message category, the first unread message is an unread message corresponding to a first message category indicated by the first area, and N is a positive integer.

According to a second aspect, the embodiments of the present invention further provide an apparatus for displaying an unread message. The apparatus includes a display module and a receiving module. The display module is configured to display a target three-dimensional graphical control; the receiving module is configured to receive a first input to a first area of the target three-dimensional graphical control; and the display module is further configured to, in response to the first input received by the receiving module, display a first unread message. A display surface of the target three-dimensional graphical control includes N areas, each area respectively indicates a different message category, the first unread message is an unread message corresponding to a first message category indicated by the first area, and N is a positive integer.

According to a third aspect, the embodiments of the present invention provide an electronic device, including a processor, a memory, and a computer program that is stored on the memory and executable on the processor, where the computer program, when executed by the processor, implements the steps of the method for displaying the unread message according to the first aspect.

According to a fourth aspect, the embodiments of the present invention provide a computer-readable storage medium having a computer program stored thereon, where the computer program, when executed by a processor, implements the steps of the method for displaying the unread message according to the first aspect.

In the embodiments of the present invention, after the electronic device displays the target three-dimensional graphical control, since the display surface of the target three-dimensional graphical control includes N areas, and each area respectively indicates a different message category, after the electronic device receives the first input of the user to the first area of the three-dimensional graphical control, the electronic device may directly display, to the user, the unread message corresponding to the first message category indicated by the first area. In this way, the electronic device can classify and collectively display unread messages in the electronic device through the three-dimensional graphical control, so that the user can conveniently and quickly search and invoke, through the three-dimensional graphical control, the unread message required by the user for timely processing, thereby avoiding the problem that the user misses viewing an important unread message associated with the user, and greatly improving the working efficiency.

### BRIEF DESCRIPTION OF THE DRAWINGS

FIG. 1 is a schematic diagram of an architecture of a possible Android operating system provided according to an embodiment of the present invention.
FIG. 2 is a schematic flowchart of a method for displaying an unread message provided according to an embodiment of the present invention.
FIG. 3 is a first schematic diagram of an interface applied by a method for displaying an unread message provided according to an embodiment of the present invention.
FIG. 4 is a second schematic diagram of an interface applied by a method for displaying an unread message provided according to an embodiment of the present invention.
FIG. 5 is a third schematic diagram of an interface applied by a method for displaying an unread message provided according to an embodiment of the present invention.
FIG. 6 is a fourth schematic diagram of an interface applied by a method for displaying an unread message provided according to an embodiment of the present invention.
FIG. 7 is a fifth schematic diagram of an interface applied by a method for displaying an unread message provided according to an embodiment of the present invention.
FIG. 8 is a sixth schematic diagram of an interface applied by a method for displaying an unread message provided according to an embodiment of the present invention.
FIG. 9 is a schematic structural diagram of an apparatus for displaying an unread message provided according to an embodiment of the present invention.
FIG. 10 is a schematic diagram of a hardware structure of an electronic device provided according to an embodiment of the present invention.

### DETAILED DESCRIPTION

The technical solutions in the embodiments of the present invention are described clearly and integrally below in combination with the accompanying drawings in the embodiments of the present invention. Apparently, the described embodiments are some of the embodiments of the present invention, but not all the embodiments. Based on the embodiments of the present invention, all other embodiments obtained by a person skilled in the art without involving an inventive effort shall fall within the scope of protection of the present invention.

It is to be understood that "/" in this description means "or". For example, A/B may represent A or B. "And/or" in this description describes only an association relationship between associated objects and represents that there may be three relationships. For example, A and/or B may represent the following three cases: Only A exists, both A and B exist, and only B exists.

"A plurality of in this description means two or more.

In the embodiments of the present invention, the word such as "exemplary" or "for example" is used for representing giving an example, an illustration, or a description. Any embodiment or design scheme described as "exemplary" or "for example" in the embodiments of the present invention is not to be explained as being more preferred or having more advantages than another embodiment or design scheme. Exactly, use of the word "exemplary" or "for example" is intended to present a relative concept in a specific manner.

To clearly describe the technical solutions of the embodiments of the present invention, words such as "first" and "second" are used for distinguishing same items or similar items whose functions are basically the same. A person skilled in the art may understand that the words such as "first" and "second" do not limit a quantity or an execution sequence. For example, a first input and a second input are used for distinguishing different inputs rather than for describing a particular order of the inputs.

An execution subject of a method for displaying an unread message provided according to the embodiments of the present invention may be an electronic device, or may be a functional module and/or a functional entity in the electronic device capable of implementing the method for displaying the unread message. Specifically, the execution subject may be determined according to actual use requirements, which is not limited in the embodiments of the present invention.

The electronic device in the embodiments of the present invention may be a terminal device. Exemplarily, the terminal device may be a mobile terminal device, or may be a non-mobile terminal device. The mobile terminal device may be a mobile phone, a tablet computer, a notebook computer, a palmtop computer, a vehicle-mounted terminal device, a wearable device, an ultra-mobile personal computer (ultra-mobile personal computer, UMPC), a netbook, a personal digital assistant (personal digital assistant, PDA), or the like, and the non-mobile terminal device may be a personal computer (personal computer, PC), a television (television, TV), a teller machine, a self-service machine, or the like, which are not specifically limited in the embodiments of the present invention.

The electronic device in the embodiments of the present invention may be an electronic device having an operating system. The operating system may be an Android operating system, may be an ios operating system, or may be another possible operating system, which is not specifically limited in the embodiments of the present invention.

By taking the Android operating system as an example, a software environment applied by a method for displaying an unread message provided according to the embodiments of the present invention is introduced below.

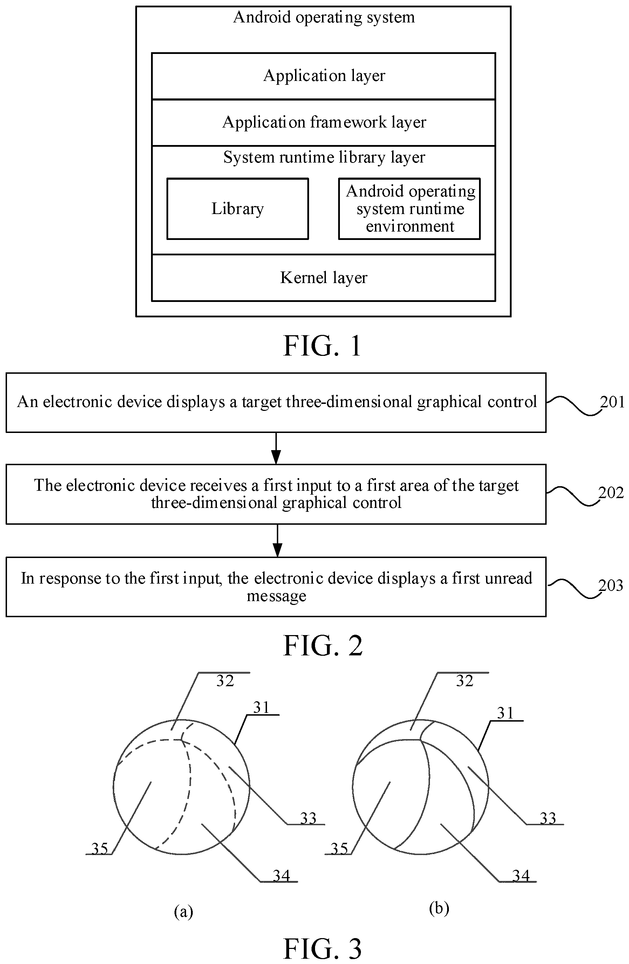

FIG. 1 is a schematic diagram of an architecture of a possible Android operating system provided according to an embodiment of the present invention. In FIG. 1, the architecture of the Android operating system includes four layers: an application layer, an application framework layer, a system runtime library layer, and a kernel layer (specifically, a Linux kernel layer).

The application layer includes various applications (including system applications and third-party applications) in the Android operating system.

The application framework layer is a framework of an application, and a developer may develop some applications on the basis of the application framework layer in the case of complying with development principles of the framework of the application.

The system runtime library layer includes a library (also referred to as a system library) and an Android operating system runtime environment. The library mainly provides various resources required by the Android operating system. The Android operating system runtime environment is used for providing a software environment for the Android operating system.

The kernel layer is an operating system layer of the Android operating system, and belongs to the bottommost layer of the software level of the Android operating system. The kernel layer provides a core system service and a hardware-related driver for the Android operating system on the basis of the Linux kernel.

By taking the Android operating system as an example, in the embodiments of the present invention, a developer may develop, on the basis of the system architecture of the Android operating system shown in FIG. 1, a software program for implementing the method for displaying the unread message provided according to the embodiment of the present invention, so that the method for displaying the unread message may run on the basis of the Android operating system as shown in FIG. 1. That is, a processor or a terminal device may implement, by running the software program in the Android operating system, the method for displaying the unread message provided according to the embodiment of the present invention.

As shown in FIG. 2, the embodiments of the present invention provide a method for displaying an unread message. The method includes step 201 to step 203.

In step 201, an electronic device displays a target three-dimensional graphical control.

In the embodiments of the present invention, the target three-dimensional graphical control includes one or more display surfaces. It may be understood that the three-dimensional graphical control refers to a control displayed in the form of a three-dimensional graphic.

In the embodiments of the present invention, the three-dimensional graphical control may be a three-dimensional geometric control, or may be other three-dimensional graphical controls.

Exemplarily, the three-dimensional geometric shape may include any one of the following: a sphere, a cylinder, a tetrahedron, a hexahedron, etc. Further, the number of display surfaces of the three-dimensional geometric control may be the same as the number of geometric surfaces, or may be different from the number of geometric surfaces. For example, by taking the three-dimensional graphical control as a tetrahedral control, the tetrahedral control may include four display surfaces.

Exemplarily, the other three-dimensional graphics may include irregular three-dimensional graphics, e.g., a three-dimensional cartoon character graphic, and may also include irregular three-dimensional geometric shapes, e.g., a three-dimensional neiloid.

In the embodiments of the present invention, the display surface of the target three-dimensional graphical control includes N areas, and each area respectively indicates a different message category. That is, one area corresponds to one message category, and N is a positive integer.

The area division of the display surface of the target three-dimensional graphical control may be user-defined, and may also be preset in advance by the electronic device, which is not limited in the embodiments of the present invention. For example, by taking the three-dimensional graphical control as a tetrahedral control as an example, each display surface of the tetrahedral control may be further split into two areas, so that the tetrahedral control may include eight areas, and each area corresponds to one message category.

Optionally, in the embodiments of the present invention, the electronic device may classify unread messages in at least the following manners.

In an example, the electronic device may classify unread messages according to a message category, and divide unread messages with the same message type into one category. For example, the message type may include: a character type, a picture type, a voice type, a video type, etc.

In an example, the electronic device may classify unread messages according to sender information (e.g., a sender nickname, an account, etc.) of the unread messages, and divide unread messages of the same sender into one category. For example, for unread messages in a chat APP, unread messages sent by a same sending device belong to the same message category.

In an example, the electronic device may further classify unread messages according to applications where the unread messages are located, and divide unread messages of a same application into one category.

In an example, the electronic device may set each unread message as a different message category, that is, one unread message corresponds to one message category. It may be understood that the N areas correspond to N unread messages.

Optionally, in the embodiments of the present invention, the electronic device may display the target three-dimensional graphical control on a current display interface in a floating manner, and may also display the target three-dimensional graphical control in a floating manner according to a predetermined transparency, which is not limited in the embodiments of the present invention.

Optionally, in the embodiments of the present invention, before displaying the target three-dimensional graphical control, the electronic device may generate the corresponding target three-dimensional graphical control according to a target two-dimensional image. The target two-dimensional image may be user-defined, and may also be preset by the electronic device, which is not limited in the embodiments of the present invention.

In an example, the electronic device may perform area division on a two-dimensional graphical control and render different degrees of color grayscale for different areas, so that the two-dimensional graphical image may be presented in the form of the three-dimensional graphical control.

In step 202, the electronic device receives a first input to a first area of the target three-dimensional graphical control.

In the embodiments of the present invention, the first input may be a touch input of a user to the first area of the target three-dimensional graphical control, and include a sliding input, a click input, a long-press input, and a particular gesture input, which is not limited in the embodiments of the present invention.

In the embodiments of the present invention, the electronic device may set a corresponding touch attribute for the target three-dimensional graphical control or each area of the target three-dimensional graphical control, so that the target three-dimensional graphical control may receive the touch input of the user and present a display effect required by the user.

In an example, by establishing a three-dimensional coordinate model, the electronic device formulates accurate display coordinates for a three-dimensional graphic corresponding to the target three-dimensional graphical control, and then, in a case that the user performs a touch input on the three-dimensional graphic, the electronic device may change a display effect of the three-dimensional graphic by changing different display coordinates of the three-dimensional graphic.

In the embodiments of the present invention, the first area may be at least one of the N areas, which is not limited in the embodiments of the present invention.

In step 203, in response to the first input, the electronic device displays a first unread message.

In the embodiments of the present invention, the first unread message is an unread message corresponding to a first message category indicated by the first area.

Optionally, in the embodiments of the present invention, the electronic device may set different colors for different areas, that is, different colors are set for different message categories. In this way, it is not only convenient for the user to distinguish the unread message category corresponding to each area, but also for the user to distinguish area boundaries of the N areas. For example, as shown in FIG. 3(a), in a case that the three-dimensional graphical control is a spherical control 31, different areas are rendered in different display colors, so as to divide a display surface of the three-dimensional spherical control into four areas: an area 31, an area 32, an area 33, and an area 34 (different colors of four areas are not shown in the drawing, and different areas are distinguished by dashed lines).

For example, the electronic device may render an area corresponding to an unread message of a character type as red, may render an area corresponding to an unread message of a picture type as yellow, may render an area corresponding to an unread message of a voice type as blue, and may render an area corresponding to an unread message of a video type as orange. Specifically, the unread message may be set according to actual requirements, which is not limited in the embodiments of the present invention.

Optionally, in the embodiments of the present invention, the electronic device may facilitate, by drawing area boundary lines of the N areas, the user to distinguish the N areas. For example, as shown in FIG. 3(b), in a case that the three-dimensional graphical control is a three-dimensional spherical control 31, the electronic device divides the spherical surface of the three-dimensional spherical control 31 into an area 32, an area 33, an area 34, and an area 35 by drawing area boundaries on the spherical surface with lines, so as to distinguish different areas on the three-dimensional spherical control 31.

In the embodiments of the present invention, different areas of the three-dimensional graphical control may be used for invoking different unread messages in the electronic device.

Exemplarily, the unread message may be directly displayed on an area of the target three-dimensional control, or may not be directly displayed on an area of the target three-dimensional control.

In the embodiments of the present invention, in a case that the electronic device receives an unread message, the three-dimensional graphical control may be directly displayed on a current display interface of the electronic device, and the three-dimensional graphical control may be invoked and displayed by receiving a preset operation of the user on the electronic device (for example, invoking and displaying the three-dimensional graphical control by receiving a double-click of the user on a volume-up button).

In this way, since the three-dimensional graphic has three-dimensional performance, the three-dimensional graphical control can greatly save the area occupying a display screen compared with a two-dimensional graphical control, and enhance watching attractiveness and control interestingness of the user.

In the embodiments of the present invention, the first unread message may be a message that is not viewed or processed by the user.

In the embodiments of the present invention, the different message categories may indicate different applications, or may indicate different categories in a same application. For example, different chat objects (e.g., a girl friend and a boss) in a same "chat" application (Application, APP) are messages of different categories.

In the embodiments of the present invention, the manner of indicating the unread message through the area of the three-dimensional graphical control may be preset by the electronic device or may be user-defined, which is not limited in the embodiments of the present invention.

In an example, the electronic device may set a received unread message by default as an unread message that needs to be displayed by the three-dimensional graphical control.

In an example, the electronic device may periodically count usage frequencies of the user for applications in the electronic device, and an unread message received by the application having a high usage frequency is set as a message that needs to be displayed by the three-dimensional graphical control. Further, in order to more accurately provide the user with a message that the user needs to view or process, the electronic device may also periodically count display content having a high usage frequency in the process of using a certain application by the user, and set an unread message related to the display content as a message that needs to be displayed by the three-dimensional graphical control.

In an example, the user may perform setting on the electronic device in advance, and set unread messages in some or all of applications in the electronic device and unread messages corresponding to specific display content in the applications as messages that need to be displayed by the three-dimensional graphical control.

In the embodiments of the present invention, the electronic device may display message content of the first unread message in the application corresponding to the first unread message, or may not enter the application, and directly display message content of the first unread message in a display interface of the three-dimensional graphical control. In a case that the electronic device directly displays the message content of the first unread message on the display interface of the three-dimensional graphical control, a display area of the message content does not overlap with a display area of a display screen where the three-dimensional graphical control is located.

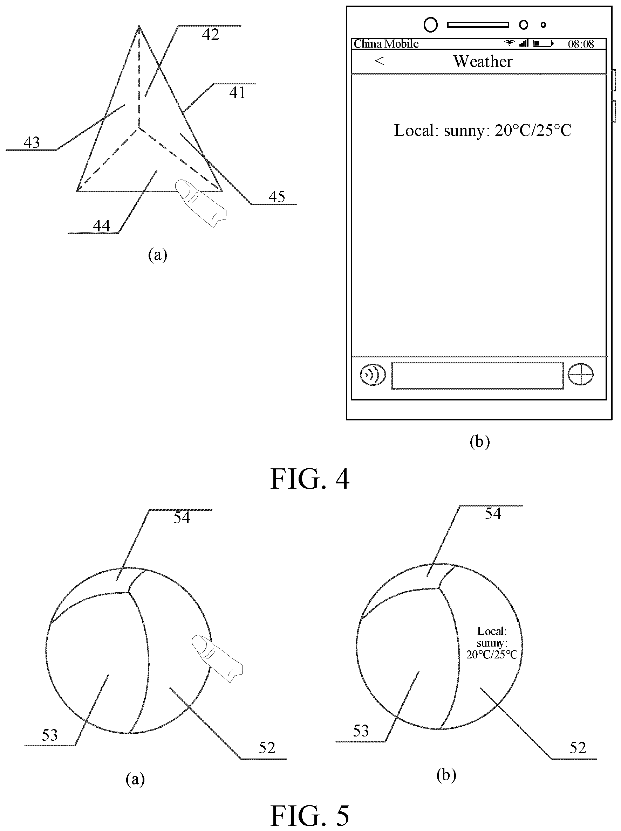

Example 1: As shown in FIG. 4(a), a tetrahedral control 41 (i.e., the target three-dimensional graphical control) is displayed on a desktop page of the electronic device. The tetrahedral control 41 distinguishes four different areas by geometric edges of the cylinder, namely an area 42, an area 43, an area 44, and an area 45, respectively. The area 42 corresponds to a "weather" APP, the area 43 corresponds to a "chat" APP, the area 44 corresponds to an "Email" APP, and the area 45 corresponds to a "game" APP. In this case, in a case that the electronic device receives a click input (i.e., the first input) of the user on the area 41 (i.e., the first area), as shown in FIG. 4(b), the electronic device jumps from the current desktop page to an unread message interface in the "weather" APP, and displays the content of the unread message: "Local: sunny: 20°C/25°C" (i.e., the first unread message).

Example 2: As shown in FIG. 5(a), a three-dimensional spherical control 51 (i.e., the target three-dimensional graphical control) is displayed on a lock screen interface of the electronic device. The sphere distinguishes different areas by lines, and there totals three areas, namely an area 52, an area 53, and an area 54, respectively. The area 52 corresponds to a "weather" APP, the area 53 corresponds to a "chat" APP, and an area 54 corresponds to an "Email" APP. In this case, in a case that the electronic device receives a click input (i.e., the first input) of the user on the area 52 (i.e., a first surface), as shown in FIG. 5(b), the area 52 displays the unread message content of the "weather" APP: "Local: sunny: 20°C/25°C" (i.e., the first unread message).

In the method for displaying the unread message provided according to the embodiments of the present invention, after the electronic device displays the target three-dimensional graphical control, since the target three-dimensional graphical control is a three-dimensional graphical control including N areas, and each area indicates a different message category, after the electronic device receives the first input of the user to a target area of the three-dimensional graphical control, the electronic device may directly display, to the user, the unread message indicated by the target area. In this way, the electronic device can classify and collectively display unread messages in the electronic device through the three-dimensional graphical control, so that the user can conveniently and quickly search and invoke, through the three-dimensional graphical control, the unread message required by the user for timely processing, thereby avoiding the problem that the user misses viewing an important unread message associated with the user, and greatly improving the working efficiency.

Optionally, in the embodiments of the present invention, in step 203 of displaying a first unread message, the method for displaying the unread message provided according to the embodiments of the present invention includes the following steps: step A1 and/or step A2 and/or step A3.

In step A1, the electronic device displays a first identifier on the first area.

The first identifier is used for indicating reminder content of the first unread message.

In step A2, the electronic device displays a second identifier on the first area.

The second identifier is used for indicating an application icon of an application corresponding to all or some of the unread messages corresponding to the first area.

In step A3, the electronic device displays a third identifier on the first area.

The third identifier is used for indicating a message category corresponding to the first area.

Exemplarily, the first identifier may be a text identifier, or may be a picture identifier, which is not limited in the embodiments of the present invention.

Exemplarily, the first identifier may be displayed on the first area through a floating window.

In an example, the reminder content of the first unread message may be displayed in the floating window, and the floating window may be displayed in an area corresponding to the first unread message.

In an example, the reminder content of the first unread message may be displayed on the first area in the form of the text identifier. The text identifier may be all or a part of the reminder content of the first unread message, which is not limited in the embodiments of the present invention.

In a case that the unread message is displayed on an area of the target three-dimensional control in the form of the text identifier, the unread message may be the same as or different from the message content. For example, the unread message may be all message content, or may be brief information content used for indicating the unread message. In a case that the unread message is brief information content, information related to the message such as the number of messages corresponding to the unread message, a name of a message sender, a message sending time, and keyword information of the message may be displayed, thereby facilitating prior understanding of the user through the target three-dimensional graphical control.

In an example, the reminder content of the first unread message may be displayed, in the form of the picture identifier, on a display area corresponding to the first unread message. The picture identifier may be an icon identifier of a message category to which the first unread message belongs. For example, the icon identifier may be an avatar identifier of the message sender corresponding to the first unread message.

Exemplarily, the second identifier may be an icon identifier.

Exemplarily, for the third identifier, please refer to the foregoing description on the first identifier, which is not repeated herein again.

In this way, the user can directly identify, through the identifier displayed on the area, the message content of the unread message corresponding to the area and/or the application icon of the message and/or the message category, so that the user can conveniently determine the first unread message that needs to be viewed and processed.

Optionally, in the embodiments of the present invention, after step 201 of displaying a target three-dimensional graphical control, the method for displaying the unread message provided according to the embodiments of the present invention further includes step B.

In step B, in a case that the number of the unread messages in the electronic device changes, the target three-dimensional graphical control is updated from a first three-dimensional graphical shape to a second three-dimensional graphical shape.

Exemplarily, in a case that the number of the messages changes, the message categories of the unread messages may change, or may not change. In an example, the electronic device may enable the first three-dimensional graphical shape of the target three-dimensional graphical control to the second three-dimensional graphical shape in a case that the message categories of the unread messages change.

Further optionally, compared with the first three-dimensional graphical shape, the second three-dimensional graphical shape may be a three-dimensional graphical shape in which an area is increased, or may be a three-dimensional graphical shape in which an area is reduced.

Optionally, the shape of the three-dimensional graphical control may be a three-dimensional geometric shape, or may be other three-dimensional graphics. The target three-dimensional graphical control is described below by using the three-dimensional graphical controls of the two shapes.

In a first case, the shape of the three-dimensional graphical control is a three-dimensional geometric shape.

In a case that the number of message categories of unread messages in the electronic device decreases, the number of geometric surfaces of the first three-dimensional graphical shape of the three-dimensional geometric control is greater than the number of geometric surfaces of the second three-dimensional graphical shape; and in a case that the number of message categories of unread messages in the electronic device increases, the number of geometric surfaces of the first three-dimensional graphical shape of the three-dimensional geometric control is less than the number of geometric surfaces of the second three-dimensional graphical shape.

Exemplarily, the three-dimensional geometric shape refers to a three-dimensional geometric shape composed of points, lines, and planes, for example, a sphere, a tetrahedron, a hexahedron, etc.

Exemplarily, for the description of the geometric surfaces, please refer to the foregoing description on the area, which is not repeated herein again.

Exemplarily, the number of the message categories of the unread messages has one-to-one correspondence to the number of the geometric surfaces. For example, in a case that the number of message categories of the unread messages is 4, the number of the geometric surfaces is also 4, that is, the three-dimensional geometric shape is a tetrahedron.

Further, the quantity change of the message categories of the unread messages is directly proportional to the quantity change of the geometric surfaces, that is, in a case that the message categories of the unread messages increase, the number of the geometric surfaces also increases. On the contrary, in a case that the number of message categories of the unread messages decreases, the number of the geometric surfaces decreases accordingly.

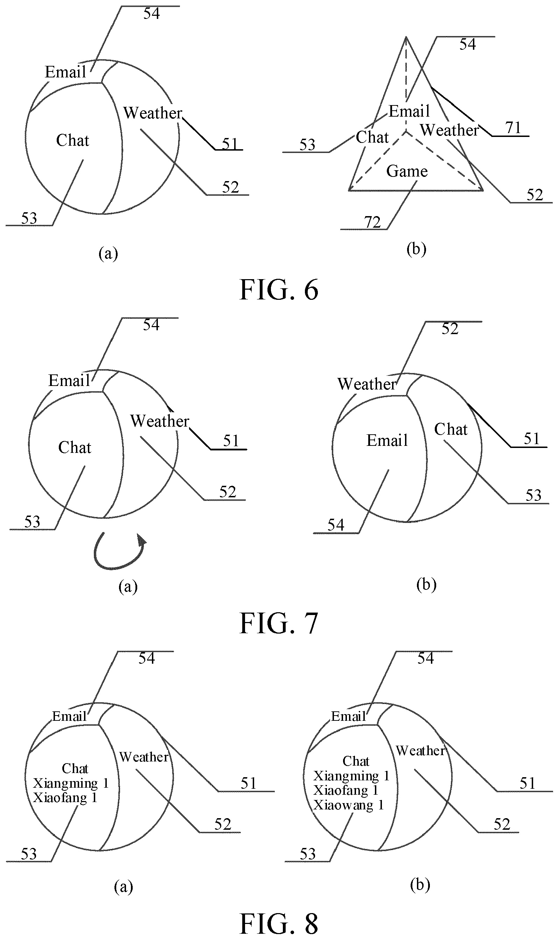

Example 3: With reference to example 1, as shown in FIG. 6(a), the text identifiers of "weather", "chat", and "Email" are displayed on the area 52, the area 53, and the area 54 respectively, so as to facilitate the user to distinguish the applications indicated by the areas. After the three-dimensional spherical control 51 (i.e., the first three-dimensional graphical shape) divided into three areas by the lines is displayed on the lock screen interface of the electronic device, the "game" APP receives a new unread message. In this case, as shown in FIG. 6(b), the electronic device newly adds a message category of an unread message, the three-dimensional spherical control 51 is updated to a tetrahedral control 71 (i.e., the second three-dimensional graphical shape), and the tetrahedral control 71 has an increased area 72 with respect to the three-dimensional spherical control 51.

In this way, the electronic device can clearly display to the user, through the three-dimensional geometric control, an unread message that needs to be viewed or processed by the user on the display interface, so as to facilitate the user to check and process the unread message in the electronic device in a timely fashion.

In a second case, the shape of the three-dimensional graphical control is other three-dimensional graphics.

Exemplarily, the other three-dimensional graphical controls may be a plurality of irregular three-dimensional graphical models that can be preset by the electronic device. Each three-dimensional graphical model corresponds to the number of unread messages of one type. In a case that the number of unread messages increases, the three-dimensional graphical models corresponding to the three-dimensional graphical control also correspondingly increases. In a case that the number of unread messages decreases, the three-dimensional graphical models corresponding to the three-dimensional graphical control also correspondingly decreases.

A relationship between the three-dimensional graphical models and the number of unread messages may be preset by the electronic device, or may be user-defined.

Thus, in a case that the electronic device receives a new unread message, the user can intuitively find, through the change of the three-dimensional graphical shape, that the electronic device receives the new unread message, thereby greatly reducing the possibility of missing the unread message.

Optionally, in the embodiments of the present invention, each area is respectively set to a different color. On this basis, in step B, the method for displaying the unread message provided according to the embodiments of the present invention includes step C.

In step C, the electronic device updates the target three-dimensional graphical control from the first three-dimensional graphical shape to the second three-dimensional graphical shape, and updates the color of each area of the target three-dimensional graphical control according to the number of areas corresponding to the second three-dimensional graphical shape.

Exemplarily, in a case that the electronic device updates the target three-dimensional graphical control from the first three-dimensional graphical shape to the second three-dimensional graphical shape, the number of areas of the target three-dimensional graphical control increases or decreases. In a case that the number of areas of the target three-dimensional graphical control decreases, the electronic device will reduce the number of color types of the target three-dimensional graphical control. In a case that the number of areas of the target three-dimensional graphical control increases, the electronic device will increase the number of color types of the target three-dimensional graphical control.

In this way, by visually observing the color change of the target three-dimensional graphic control, the user can view, in a timely fashion, the dynamic change of the unread message received by the electronic device, so as to process, in a timely fashion, the unread message received by the electronic device.

Optionally, in the embodiments of the present invention, before step 202, the method for displaying the unread message provided according to the embodiments of the present invention further includes step D 1 and step D2.

In step D 1, the electronic device receives a second input of the user to the target three-dimensional graphical control.

In step D2, in response to the second input, the electronic device controls the target three-dimensional graphical control to rotate, and an area currently displayed by the rotated target three-dimensional graphical control includes the first area.

Exemplarily, the electronic device may receive the second input of the user to the target three-dimensional graphical control within a predetermined time period, so as to control the target three-dimensional graphical control to rotate.

Exemplarily, the second input may be one of a plurality of input manners in the touch inputs, such as a sliding input or a click input or a particular gesture input, and may also be a combination of a plurality of single touch input modes, such as a combination of a sliding mode and a click input or a combination of a sliding input and a particular gesture input, which is not limited in the embodiments of the present invention.

For example, by taking the target three-dimensional graphical control as a spherical control including three areas as an example, when a user wants to invoke one of the areas, the second input may be, within 2 seconds, first receiving a pinch-in input of the user to reduce the display area of the spherical control on the display screen, and then receiving a single-finger sliding input of the user on the spherical control to control the spherical control to rotate to the front side of the display screen to directly display the area required by the user. That is, the electronic device may complete a rotational control operation on the target three-dimensional graphical control by receiving consecutive input operations of the user in a same display screen within a predetermined time period.

Further, the display screen of the electronic device may further receive other acting forces of the user such as pressure and friction force on the display screen. In this way, in the process of receiving the touch input by the electronic device, the single touch input may generate a plurality of different effects according to different user input manners. For example, when the display screen can receive a pressure input, and a single-click input does not generate pressure on the display screen, it may be a select input acting as triggering the target three-dimensional graphical control to automatically rotate on the display screen when the single-click input does not generate pressure on the display screen.

Exemplarily, the electronic device may receive the second input of the user to a display area where the target three-dimensional graphical control is located or receive the second input of the user to a peripheral display area of the target three-dimensional graphical control, so as to control the target three-dimensional graphical control to rotate, and update and display a new area on the display interface.

Exemplarily, the electronic device may set a rotation center axis or a rotation center point according to different numbers of areas of the target three-dimensional graphical control, so as to facilitate the user to perform a second input on the target three-dimensional graphical control, and control the target three-dimensional graphical control to rotate, thereby facilitating viewing of all areas of the target three-dimensional graphical control.

The electronic device may determine to set the rotation center axis or the rotation center point for the target three-dimensional graphical control according to the operation steps when the user performs the second input on the target three-dimensional graphical control. Specifically, in a case that the operation steps when the target three-dimensional graphical control uses the rotation center axis is less than the operation steps of using the rotation center point, the electronic device sets the rotation center axis for the target three-dimensional graphical control, and in a case that the operation steps when the target three-dimensional graphical control uses the rotation center point is less than the operation steps of using the rotation center axis, the electronic device sets the rotation center point for the target three-dimensional graphical control.

In an example, an example in which the electronic device sets the rotation center point for the target three-dimensional graphical control is given. The electronic device rotates the target three-dimensional graphical control in any direction with the center point as the center. In the rotation process, in addition to the center point, other coordinates of the three-dimensional display graphic corresponding to the target three-dimensional graphical control may change.

In another example, an example in which the electronic device sets the rotation center axis for the target three-dimensional graphical control is given. The electronic device rotates the target three-dimensional graphical control in a direction perpendicular to the central axis with the central axis as the center. In a rotation process, in addition to the central axis, other coordinates of the three-dimensional display graphic corresponding to the target three-dimensional graphical control may change.

Exemplarily, the first area may be direct front display or side display, which is not limited in the embodiments of the present invention.

Exemplarily, the second input may further include an input parameter of the user to the electronic device, where the input parameter is used for indicating a motion parameter of rotation of the three-dimensional graphical control.

In an example, the input parameter may include a rotation angle, a rotation duration, a rotation direction, and a rotation speed of the three-dimensional graphical control.

Exemplarily, after the electronic device receives the second input, the input parameter may be preset by the electronic device, or may be user-defined, which is not limited in the embodiments of the present invention.

In one example, the electronic device may receive a sliding input as the second input. Specifically, the electronic device may receive a sliding input of the user to an area where the three-dimensional graphical control is located, and a sliding direction of the sliding input is a rotation direction of the three-dimensional graphic space; the duration of the sliding input is directly proportional to the rotation angle of the three-dimensional graphical control, that is, the longer the sliding input duration is, the larger the rotation angle is, and conversely, the smaller the rotation angle is; and similarly, the sliding input duration is also directly proportional to the rotation duration of the three-dimensional graphical control, that is, the longer the sliding input duration is, the longer the rotation duration is, and conversely, the shorter the rotation duration is.

In another example, the electronic device may receive a click input as the second input. Specifically, the electronic device may receive a click input of the user to an area outside the area where the three-dimensional graphical control is located, and after receiving the input, the electronic device performs rotation toward the clicked area.

In a case that the second input is the click input, the input parameters other than the rotation direction in the input parameters may be a reasonable rotation angle preset when the electronic device receives the second input each time according to the number of areas in the current three-dimensional graphical control. For example, in a case that the three-dimensional graphical control is a sphere, if the number of areas of the three-dimensional graphical control is 2, and the user clicks a peripheral area of the three-dimensional graphical control once, the three-dimensional graphical control rotates by 180° for 1 second at a rotation speed of 5 cm/s; and if the number of areas of the three-dimensional graphical control increases to 3, and the user clicks a peripheral area of the three-dimensional graphical control once, the single rotation angle of the three-dimensional graphical control is automatically switched to 120°, and the rotation duration and the rotation speed are unchanged, so that the user can conveniently view the areas of the three-dimensional graphical control.

Example 5: With reference to example 1, as shown in FIG. 7(a), the text identifiers of "weather", "chat" and "Email" are displayed on the area 52, the area 53, and the area 54 respectively, so as to facilitate the user to distinguish the applications indicated by the areas. In a case that the target three-dimensional graphical control fails to display, on the current display interface, the area 53 corresponding to the unread message that the user needs to view, the user may perform a click input (i.e., the second input) on the right display area of the three-dimensional spherical control 51. As shown in FIG. 7(b), the three-dimensional spherical control 51 rotates to the right by 120° with the sphere center as the center, so as to facilitate the user to view the area 53.

Exemplarily, since the target three-dimensional graphical control is a three-dimensional graphical control, the electronic device may establish display coordinates for the three-dimensional graphical control during displaying the three-dimensional graphical control. On this basis, the second input of the user to the display screen of the electronic device is substantially a two-dimensional plane input. The electronic device establishes, for the two-dimensional plane input, a conversion formula and a display model between the two-dimensional plane input and the three-dimensional graphic display mode, converts an input parameter (e.g., a distance, a speed, and a direction) of the two-dimensional plane input, and projects the input parameter onto display coordinates of the three-dimensional graphic, and changes a distance, a speed, and a direction when the three-dimensional graphic is displayed. There is a mapping relationship between the input parameter of the two-dimensional plane input and a rotation parameter (e.g., a rotation distance, a rotation speed, and a rotation direction) when the three-dimensional graphic is displayed.

Further, the mapping relationship between the two-dimensional plane input and the three-dimensional graphic display may be implemented by setting a conversion ratio. The conversion ratio may be preset by the electronic device, or may be user-defined, which is not limited in the embodiments of the present invention.

For example, an example in which the second input is used for controlling the three-dimensional graphical control to change a display distance is given. After the electronic device receives the second input of the user, the input distance of the user is specifically transformed into a moving distance of the three-dimensional graphic through a physical/analog mapping algorithm. Specifically, according to the conversion ratio set between the three-dimensional graphic and the input distance of the user, in a case that the input distance of the user moves by one centimeter, the three-dimensional model moves by three centimeters.

In this way, through the second input, the user can flexibly perform rotation control on the target three-dimensional graphical control, so as to more conveniently view the unread message indicated by the area on the target three-dimensional graphical control.

Optionally, in the embodiments of the present invention, before step 201, the method for displaying the unread message provided according to the embodiments of the present invention further includes step E.

In step E, in a case that the electronic device receives a second unread message corresponding to a second message category, the electronic device displays the second unread message on a second area of the target three-dimensional graphical control.

Exemplarily, the second area is a display area corresponding to the second message category.

Exemplarily, for the second area, please refer to the foregoing description on the area, which is not repeated herein again.

Exemplarily, for the second message category, please refer to the foregoing description on the message category, which is not repeated herein again.

Exemplarily, the second area may be a display area already existing on the target three-dimensional graphical control of the electronic device, or may be a display area that does not exist on the target three-dimensional graphical control.

In an example, the second message category corresponding to the second unread message may be a message category already included on the target three-dimensional graphical control. In this case, in a case that the electronic device receives the second unread message that is the same as the second message category again, there is no need to add a display area on the target three-dimensional graphical control, and the second unread message may be indicated directly using the second area corresponding to the second message category.

In another example, the second message category corresponding to the second unread message may be a message category that is not included on the target three-dimensional graphical control. In this case, in a case that the electronic device receives the second unread message that is the same as the second message category, a display area may be added on the target three-dimensional graphical control, and the second unread message may be indicated using the second area corresponding to the second message category.

Example 6: With reference to example 1, as shown in FIG. 8(a), the text identifiers of "weather", "chat" and "Email" are displayed on the area 52, the area 53, and the area 54 respectively, so as to facilitate the user to distinguish the applications indicated by the areas. In unread messages of the three-dimensional spherical control 51 including three APPs, the "chat" APP includes two unread messages waiting for viewing by the user, which are displayed on the display area 53 in the display form of the brief content respectively: "Xiangming 1" and "Xiaofang 1". In a case that the electronic device receives one unread message (i.e., the second unread message) of the "chat" APP again, as shown in FIG. 8(b), the electronic device is not required to add a display area, and the brief information content of the newly added unread message may be directly added on the display area 53, namely "Xiaowang 1".

In this way, the electronic device can employ a display mode of directly displaying the unread message on the three-dimensional graphical control, so as to facilitate the user to quickly view and operate the unread message in a timely fashion.

Optionally, in the embodiments of the present invention, after step 202, the method for displaying the unread message provided according to the embodiments of the present invention further includes step F.

In step F, in response to the first input, the electronic device displays a display interface of a first application corresponding to the first unread message.

Exemplarily, after the electronic device receives the first input of the user, the display interface of the electronic device may be updated as the display interface of the application corresponding to the first unread message, where the display interface may be a display interface displaying all message content of the first unread message.

Example 7: In a case that the first unread message is message 1 corresponding to the "chat" APP, the electronic device receives a click input (i.e., the first input) of the user to the area corresponding to message 1 on the three-dimensional graphical control displayed on the desktop page. In this case, the electronic device updates the current desktop page to a dialogue interface (i.e., the display interface of the first application) corresponding to message 1 in the "chat" APP, and meanwhile, the three-dimensional graphical control stops the display, and the user can directly process message 1 in the dialogue interface.

In this way, the user can directly enter, through the first input, a message interface of the application to which the area receiving the first input belongs, so that the user can directly enter the application to process the first unread message.

In the embodiments of the present invention, the method for displaying the message shown in each of the foregoing method drawings is exemplarily described in combination with one of the accompanying drawings in the embodiments of the present invention. During specific implementation, the method for displaying the message shown in the foregoing method drawings may also be implemented in combination with any other accompanying drawings in the foregoing embodiments, which is not repeated herein again.

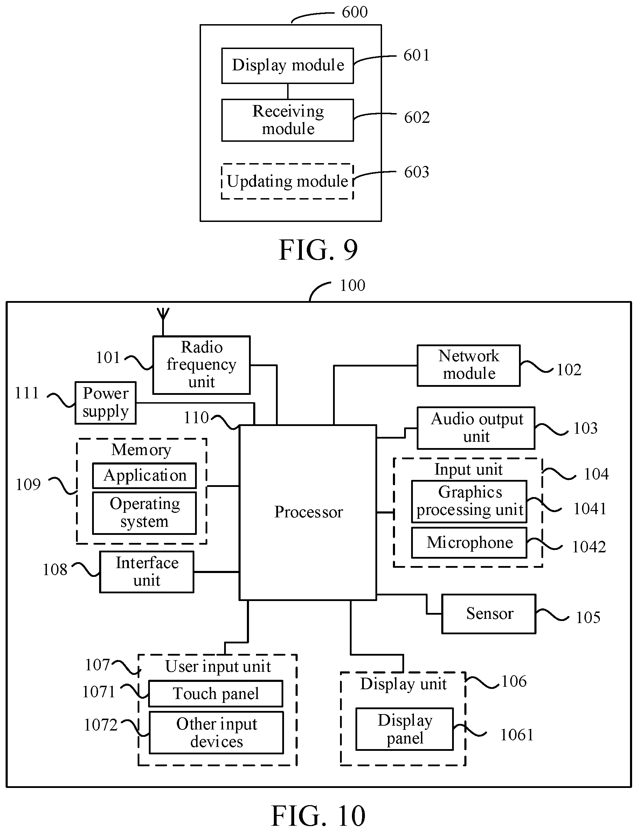

FIG. 9 is a schematic structural diagram of an apparatus for displaying an unread message provided according to an embodiment of the present invention. As shown in FIG. 9, an apparatus 600 for displaying an unread message includes: a display module 601 and a receiving module 602. The display module 601 is configured to display a target three-dimensional graphical control; the receiving module 602 is configured to receive a first input to a first area of the target three-dimensional graphical control displayed by the display module 601; and the display module 601 is further configured to, in response to the first input received by the receiving module 602, display a first unread message. Areas of the target three-dimensional graphical control include N areas, each display area respectively indicates a different message category, the first unread message is an unread message corresponding to a first message category indicated by the first area, and N is a positive integer.

Optionally, in the embodiments of the present invention, the apparatus 600 further includes an updating module 603. The updating module 603 is configured to update, in a case that the number of unread messages in the electronic device changes, the target three-dimensional graphic control displayed by the display module from a first three-dimensional graphical shape to a second three-dimensional graphical shape.

Optionally, in the embodiments of the present invention, the three-dimensional graphical control is a three-dimensional geometric control. In a case that the number of message categories of unread messages in the electronic device decreases, the number of geometric surfaces of the first three-dimensional graphical shape of the three-dimensional geometric control is greater than the number of geometric surfaces of the second three-dimensional graphical shape; and in a case that the number of message categories of unread messages in the electronic device increases, the number of geometric surfaces of the first three-dimensional graphical shape of the three-dimensional geometric control is less than the number of geometric surfaces of the second three-dimensional graphical shape.

Optionally, in the embodiments of the present invention, the display module 601 is further configured to: in a case that the electronic device receives a second unread message corresponding to the second message category, display the second unread message on a second area of the target three-dimensional graphical control, where the second area is a display area corresponding to the second message category.

Optionally, in the embodiments of the present invention, the updating module 603 is specifically configured to update the target three-dimensional graphical control from the first three-dimensional graphical shape to the second three-dimensional graphical shape, and update the color of each area of the target three-dimensional graphical control according to the number of areas corresponding to the second three-dimensional graphical shape.

In the apparatus for displaying the unread message provided according to the embodiments of the present invention, after the electronic device displays the target three-dimensional graphical control, since the display surface of the target three-dimensional graphical control includes N areas, and each area respectively indicates a different message category, after the electronic device receives the first input of the user to the first area of the three-dimensional graphical control, the electronic device may directly display, to the user, the unread message corresponding to the first message category indicated by the first area. In this way, the electronic device can classify and collectively display unread messages in the electronic device through the three-dimensional graphical control, so that the user can conveniently and quickly search and invoke, through the three-dimensional graphical control, the unread message required by the user for timely processing, thereby avoiding the problem that the user misses viewing an important unread message associated with the user, and greatly improving the working efficiency.

The electronic device provided according to the embodiments of the present invention can implement various processes implemented by the electronic device in the foregoing method embodiments, which is not repeated herein again in order to avoid repetition.

As shown in FIG. 9, modules necessarily included in the apparatus 600 for displaying the unread message are illustrated by solid-line boxes, for example, the display module 601. A module that may be included/may not be included in the apparatus 600 for displaying the unread message is illustrated by a dashed line box, for example, the updating module 603.

FIG. 10 is a schematic diagram of a hardware structure of an electronic device for implementing the embodiments of the present invention. The electronic device 100 includes, but is not limited to, a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that the structure of the electronic device 100 shown in FIG. 10 does not constitute a limitation on the electronic device. The electronic device 100 may include components more or fewer than those illustrated in the figure, or some components are combined or different component arrangements are adopted. In the embodiments of the present invention, the electronic device 100 includes, but is not limited to, a mobile phone, a tablet computer, a notebook computer, a palmtop computer, a vehicle-mounted electronic device, a wearable device, and a pedometer.

The display module 106 is configured to display a target three-dimensional graphical control; the user input unit 107 is configured to receive a first input to a first area of the target three-dimensional graphical control displayed by the processor 110; and the display unit 106 is configured to, in response to the first input received by the user input unit 107, display a first unread message. A display surface of the target three-dimensional graphical control includes N areas, each area respectively indicates a different message category, the first unread message is an unread message corresponding to a first message category indicated by the first area, and N is a positive integer.

In the electronic device provided according to the embodiments of the present invention, after the electronic device displays the target three-dimensional graphical control, since the display surface of the target three-dimensional graphical control includes N areas, and each area respectively indicates a different message category, after the electronic device receives the first input of the user to the first area of the three-dimensional graphical control, the electronic device may directly display, to the user, the unread message corresponding to the first message category indicated by the first area. In this way, the electronic device can classify and collectively display unread messages in the electronic device through the three-dimensional graphical control, so that the user can conveniently and quickly search and invoke, through the three-dimensional graphical control, the unread message required by the user for timely processing, thereby avoiding the problem that the user misses viewing an important unread message associated with the user, and greatly improving the working efficiency.

It is to be understood that in the embodiments of the present invention, the radio frequency unit 101 may be configured to receive and transmit information, or receive and send a signal during a call, and is specifically configured to, after receiving downlink data from a base station, send the downlink data to the processor 110 to be processed, and also send uplink data to the base station. Generally, the radio frequency unit 101 includes, but is not limited to, an antenna, at least one amplifier, a transceiver, a coupler, a low noise amplifier, and a duplexer. In addition, the radio frequency unit 101 may also communicate with a network and other devices through a wireless communication system.

The electronic device 100 provides wireless broadband Internet access for the user through the network module 102, for example, helping the user to send and receive emails, browse web pages, and access streaming media.

The audio output unit 103 may convert audio data received by the radio frequency unit 101 or the network module 102 or stored in the memory 109 into an audio signal and output the audio signal as sound. Moreover, the audio output unit 103 may also provide audio output (e.g., call signal received sound, message received sound, etc.) related to a specific function performed by the electronic device 100. The audio output unit 103 includes a speaker, a buzzer, a receiver, etc.

The input unit 104 is configured to receive an audio or video signal. The input unit 104 may include a graphics processing unit (Graphics Processing Unit, GPU) 1041 and a microphone 1042. The graphics processing unit 1041 processes image data of a still picture or video obtained by an image capture device (such as a camera) in a video capture mode or an image capture mode. A processed image frame may be displayed on the display unit 106. The image frame processed by the graphics processing unit 1041 may be stored in the memory 109 (or another storage medium) or sent by the radio frequency unit 101 or the network module 102. The microphone 1042 can receive sound and can process such sound into audio data. The processed audio data may be converted, in the case of a telephone call mode, into a format that may be sent to a mobile communication base station via the radio frequency unit 101 for output.

The electronic device 100 further includes at least one sensor 105, such as a light sensor, a motion sensor, and other sensors. Specifically, the light sensor includes an ambient light sensor and a proximity sensor. The ambient light sensor may adjust a brightness of a display panel 1061 according to a brightness of ambient light. The proximity sensor may turn off the display panel 1061 and/or enter a backlight state when the electronic device 100 moves to the ears. As a motion sensor, an accelerometer sensor may detect a magnitude of acceleration (generally, three axes) in each direction, may detect a magnitude of gravity and a direction when stationary, may be configured to recognize a pose (such as horizontal and vertical screen switching, related games, and magnetometer pose calibration) of an electronic device, and has vibration recognition related functions (such as a pedometer and a tap). The sensor 105 may further include a fingerprint sensor, a pressure sensor, an iris sensor, a molecular sensor, a gyroscope, a barometer, a hygrometer, a thermometer, an infrared sensor, etc., which are not repeated herein again.

The display unit 106 is configured to display information inputted by the user or information provided to the user. The display unit 106 may include the display panel 1061, and the display panel 1061 may be configured in the form of a liquid crystal display (Liquid Crystal Display, LCD), an organic light-emitting diode (Organic Light-Emitting Diode, OLED), or the like.

The user input unit 107 may be configured to receive inputted digital or character information, and generate a button signal input related to user settings and function control of the electronic device 100. Specifically, the user input unit 107 includes a touch panel 1071 and other input devices 1072. The touch panel 1071, also referred to as a touch screen, may collect a touch operation of the user on or near the touch panel 1071 (such as an operation of a user using any suitable object or accessory such as a finger or a stylus on the touch panel 1071 or near the touch panel 1071). The touch panel 1071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, sends same to the processor 110, and receives and executes a command sent by the processor 110. In addition, the touch panel 1071 may be implemented in a plurality of types such as a resistive type, a capacitive type, an infrared ray, and a surface acoustic wave. In addition to the touch panel 1071, the user input unit 107 may further include other input devices 1072. Specifically, the other input devices 1072 may include, but are not limited to, a physical keyboard, a function key (such as a volume control key and a switch key), a trackball, a mouse, and an operating rod, which are not repeated herein again.

Further, the touch panel 1071 may cover the display panel 1061. After the touch panel 1071 detects a touch operation on or near the touch panel 1071, the touch panel 1071 transmits the touch operation to the processor 110 to determine the type of a touch event, and then the processor 110 provides a corresponding visual output on the display panel 1061 according to the type of the touch event. Although in FIG. 10, the touch panel 1071 and the display panel 1061 serve as two independent components to implement input and output functions of the electronic device 100, in some embodiments, the touch panel 1071 and the display panel 1061 may be integrated to implement the input and output functions of the electronic device 100, which is not limited herein.

The interface unit 108 is an interface through which an external apparatus is connected to the electronic device 100. For example, the external apparatus may include a wired or wireless headset port, an external power source (or battery charger) port, a wired or wireless data port, a memory card port, a port for connecting an apparatus having an identification module, an audio input/output (I/O) port, a video I/O port, an earphone port, etc. The interface unit 108 may be configured to receive an input (e.g., data information, power, etc.) from the external apparatus and transmit the received input to one or more elements within the electronic device 100 or may be configured to transmit data between the electronic device 100 and the external apparatus.

The memory 109 may be configured to store a software program and various data. The memory 109 may mainly include a storage program area and a storage data area. The storage program area may store an operating system, an application required by at least one function (such as a sound playing function and an image playing function), and the like. The storage data area may store data (such as audio data and contacts) created according to the use of the mobile phone. In addition, the memory 109 may include a high-speed random access memory, and may further include a non-volatile memory, for example, at least one magnetic disk storage device, a flash memory device, or other volatile solid-state storage devices.

The processor 110 is a control center of the electronic device 100, connects to various parts of the entire electronic device 100 by using various interfaces and lines, and performs various functions and processing data of the electronic device 100 by running or executing software programs and/or modules stored in the memory 109 and invoking data stored in the memory 109, so as to monitor the entire electronic device 100. The processor 110 may include one or more processing units. Optionally, the processor 110 may integrate an application processor and a modem processor, where the application processor mainly processes an operating system, a user interface, an application, and the like, and the modem processor mainly processes wireless communication. It may be understood that the modem processor may not be integrated into the processor 110.

The electronic device 100 may further include a power supply 111 (such as a battery) for supplying power to each component. Optionally, the power supply 111 may be logically connected to the processor 110 through a power management system, thereby implementing functions such as charging and discharging management and power consumption management through the power management system.

In addition, the electronic device 100 includes some functional modules that are not shown, which are not repeated herein again.

Optionally, the embodiments of the present invention further provide an electronic device, including a processor, a memory, and a computer program that is stored on the memory and executable on the processor 110, where the computer program, when executed by the processor, implements processes of the embodiments of the method for displaying the unread message, and can realize the same technical effect. Details are not described herein again in order to avoid repetition.

The embodiments of the present invention further provide a computer-readable storage medium having a computer program stored thereon, where the computer program, when executed by a processor, implements processes of the embodiments of the method for displaying the unread message, and can realize the same technical effect. Details are not described herein again in order to avoid repetition. The computer-readable storage medium may be, for example, a read-only memory (Read-Only Memory ROM), a random access memory (Random Access Memory, RAM), a magnetic disk, or an optical disc.

Herein, the terms "include", "comprise", or any variants thereof are intended to cover a non-exclusive inclusion, so that a process, a method, an article, or a device that includes a list of elements not only includes those elements, but also includes other elements which are not expressly listed, or further includes elements inherent to such process, method, article, or device. Without more restrictions, an element defined by the phrase "include a ... " does not exclude the presence of an additional equivalent element in the process, method, article, or device including the element.

Through the description of the foregoing embodiments, a person skilled in the art can clearly understand that the methods in the foregoing embodiments may be implemented by means of software plus a necessary general hardware platform, and of course, may also be implemented by hardware, but in many cases the former is better implementation. Based on such an understanding, the technical solution of the present invention in essence, or a part that contributes to related technologies, may be embodied in the form of a software product. The computer software product may be stored in a storage medium (such as a ROM/RAM, a magnetic disk, and an optical disk), and includes multiple instructions to enable a terminal device (which may be a mobile phone, a computer, a server, an air conditioner, or a network device, etc.) to execute the method described in various embodiments of the present invention.

The embodiments of the present invention have been described above with reference to the drawings, but the present invention is not limited to the specific embodiments described above, and the specific embodiments described above are merely illustrative and not restrictive. In the light of the present invention, a person skilled in the art may make many variations without departing from the spirit and the protection scope of the claims, which fall within the protection of the present invention.

## Claims

1. A method for displaying an unread message, comprising:
displaying a target three-dimensional graphical control;
receiving a first input to a first area of the target three-dimensional graphical control; and
in response to the first input, displaying a first unread message;
wherein a display surface of the target three-dimensional graphical control comprises N areas, each area respectively indicates a different message category, the first unread message is an unread message corresponding to a first message category indicated by the first area, and N is a positive integer.

2. The method according to claim 1, wherein after the displaying a target three-dimensional graphical control, the method further comprises:
in a case that the number of unread messages in an electronic device changes, updating the target three-dimensional graphical control from a first three-dimensional graphical shape to a second three-dimensional graphical shape.

3. The method according to claim 2, wherein the target three-dimensional graphical control is a three-dimensional geometric control;
in a case that the number of message categories of unread messages in the electronic device decreases, the number of geometric surfaces of the first three-dimensional graphical shape of the three-dimensional geometric control is greater than the number of geometric surfaces of the second three-dimensional graphical shape; and
in a case that the number of message categories of unread messages in the electronic device increases, the number of geometric surfaces of the first three-dimensional graphical shape of the three-dimensional geometric control is less than the number of geometric surfaces of the second three-dimensional graphical shape.

4. The method according to claim 1, wherein before the displaying a target three-dimensional graphical control, the method further comprises:
in a case that the electronic device receives a second unread message corresponding to a second message category, displaying the second unread message on a second area of the target three-dimensional graphical control,
wherein the second area is an area corresponding to the second message category.

5. The method according to claim 2, wherein each area is respectively set to a different color; and
the updating the target three-dimensional graphical control from a first three-dimensional graphical shape to a second three-dimensional graphical shape comprises:
updating the target three-dimensional graphical control from the first three-dimensional graphical shape to the second three-dimensional graphical shape, and updating the color of each area of the target three-dimensional graphical control according to the number of areas corresponding to the second three-dimensional graphical shape.

6. An apparatus for displaying an unread message, comprising a display module and a receiving module, wherein
the display module is configured to display a target three-dimensional graphical control;
the receiving module is configured to receive a first input to a first area of the target three-dimensional graphical control; and
the display module is further configured to, in response to the first input received by the receiving module, display a first unread message;
wherein a display surface of the target three-dimensional graphical control comprises N areas, each area respectively indicates a different message category, the first unread message is an unread message corresponding to a first message category indicated by the first area, and N is a positive integer.

7. The apparatus according to claim 6, further comprising an updating module, wherein
the updating module is configured to, in a case that the number of unread messages in an electronic device changes, update a first three-dimensional graphical shape of the target three-dimensional graphical control displayed by the display module to a second three-dimensional graphical shape.

8. The method according to claim 7, wherein the target three-dimensional graphical control is a three-dimensional geometric control;
in a case that the number of message categories of unread messages in the electronic device decreases, the number of geometric surfaces of the first three-dimensional graphical shape of the three-dimensional geometric control is greater than the number of geometric surfaces of the second three-dimensional graphical shape; and
in a case that the number of message categories of unread messages in the electronic device increases, the number of geometric surfaces of the first three-dimensional graphical shape of the three-dimensional geometric control is less than the number of geometric surfaces of the second three-dimensional graphical shape.

9. The apparatus according to claim 6, wherein
the display module is further configured to, in a case that the electronic device receives a second unread message corresponding to a second message category, display the second unread message on a second area of the target three-dimensional graphical control,
wherein the second area is a display area corresponding to the second message category.

10. The apparatus according to claim 7, wherein each area is respectively set to a different color; and
the updating module is specifically configured to update the target three-dimensional graphical control from the first three-dimensional graphical shape to the second three-dimensional graphical shape, and update the color of each area of the target three-dimensional graphical control according to the number of areas corresponding to the second three-dimensional graphical shape.

11. An electronic device, comprising a processor, a memory, and a computer program that is stored on the memory and executable the processor, wherein the computer program, when executed by the processor, implements the steps of the method for displaying the unread message according to any one of claims 1 to 5.

12. A computer-readable storage medium, having a computer program stored thereon, wherein the computer program, when executed by a processor, implements the steps of the method for displaying the unread message according to any one of claims 1 to 5.

13. A computer program product, wherein the program product is stored in a non-volatile storage medium, and the program product is executed by at least one processor to implement the method for displaying the unread message according to any one of claims 1 to 5.

14. An electronic device, wherein the electronic device is configured to perform the method for displaying the unread message according to any one of claims 1 to 5.
